# EUROPEAN PATENT APPLICATION

(11) **EP 2 621 016 A1**
(43) Date of publication of application: **31.07.2013**
(21) Application number: 12152971.3
(22) Date of filing: 27.01.2012
(51) Int. Cl.: H01Q 1/24, H04M 1/02, H01Q 13/10

(54) **Mobile wireless communications device including rigid mechanical stiffener slot antenna and related methods**

(71) Applicant: Research In Motion Limited, Waterloo, ON N2L 3W8 (CA)
(72) Inventor: Jeong, Seong Heon, Irving, TX Texas 75039 (US)
(74) Representative: Noble, Nicholas

(57) **Abstract**

A mobile wireless communications device may include a portable housing and a printed circuit board carried by the portable housing. The mobile wireless communications device may also include a rigid mechanical stiffener carried by the portable housing and may include an electrically conductive material. The rigid mechanical stiffener may have a slot therein adjacent an end thereof to define a slot antenna. Wireless transceiver circuitry may be carried by the PCB and coupled to the slot antenna. In some embodiments, the slot antenna may be cooperate with another antenna carried by the portable housing.

## Description

### Technical Field

The present disclosure generally relates to the field of wireless communications systems, and, more particularly, to mobile wireless communications devices and related methods.

### Background

Mobile wireless communications systems continue to grow in popularity and have become an integral part of both personal and business communications. For example, cellular telephones allow users to place and receive voice calls almost anywhere they travel, while tablet personal computers allow mobile data communications almost anywhere. Moreover, as mobile communications technology, for example, cellular communications technology, has increased, so too has the functionality of cellular devices and the different types of devices available to users. For example, many cellular devices now incorporate personal digital assistant (PDA) features such as calendars, address books, task lists, etc. Moreover, such multi-function devices, including, for example, tablet personal computers, may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. One challenge this poses for cellular device manufacturers is designing antennas that provide desired operating characteristics and desired mechanical strength within the relatively limited amount of space available for antennas and within operating guidelines for a given device.

### Brief Description of the Drawings

FIG. 1 is an exploded view of a mobile wireless communications device including a rigid mechanical stiffener in accordance with one example embodiment.

FIG. 2 is a top schematic diagram of the rigid mechanical stiffener of FIG. 1.

FIG. 3 is a schematic diagram of a conventional slot antenna in accordance with the prior art.

FIG. 4 is a measured reflection coefficient graph for the rigid mechanical stiffener of the device in FIG. 1.

FIG. 5 is a perspective view of the rigid mechanical stiffener of FIG. 1 including a dielectric body within the slot.

FIG. 6 is an enlarged top perspective view of the rigid mechanical stiffener and the further antenna of the device of FIG. 1.

FIG. 7 is a bottom perspective view of the rigid mechanical stiffener and further antenna of the device of FIG. 1.

FIG. 8 is a measured reflection coefficient graph for the rigid mechanical stiffener and the further antenna of the device of FIG. 1.

FIG. 9 is a schematic block diagram illustrating additional components that may be included in the mobile wireless communications device of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

In accordance with one exemplary aspect, a mobile wireless communications device may include a portable housing and a printed circuit board carried by the portable housing. The mobile wireless communications device may also include a rigid mechanical stiffener carried by the portable housing and may include an electrically conductive material. The rigid mechanical stiffener may have a slot therein adjacent an end thereof to define a slot antenna. Wireless transceiver circuitry may be carried by the PCB and coupled to the slot antenna.

The rigid mechanical stiffener may include a ring coupled to an inner periphery of the portable housing, and a plate extending across the ring. The plate may extend across a width of the portable housing, for example.

A dielectric body may be within the slot, for example. The rigid mechanical stiffener may include metal, for example.

The mobile wireless communications device may further include a further antenna carried by the portable housing and coupled to the wireless transceiver circuitry. The further antenna may include at least one planar inverted F-antenna (PIFA), for example. The further antenna may also be a flexible antenna, for example and may be carried between the portable housing and the rigid mechanical stiffener.

The mobile wireless communications device may further include a display carried by the mechanical stiffener. The portable housing may include a rear housing portion receiving the rigid mechanical stiffener therein, for example.

A method aspect is directed to a method of making a mobile wireless communications device that may include a portable housing, a printed circuit board (PCB) carried the portable housing, and wireless transceiver circuitry carried by the PCB. The method may include positioning a rigid mechanical stiffener to be carried by a portable housing and comprising an electrically conductive material. The rigid mechanical stiffener may have a slot therein adjacent an end thereof to define a slot antenna. The method may further include coupling the wireless transceiver circuitry to the slot antenna.

The method may include forming a rigid mechanical stiffener to be carried by a portable housing and including an electrically conductive material. The rigid mechanical stiffener 50 may have a slot therein adjacent an end thereof to define a slot antenna. The method may further include coupling wireless transceiver circuitry to the slot antenna, for example.

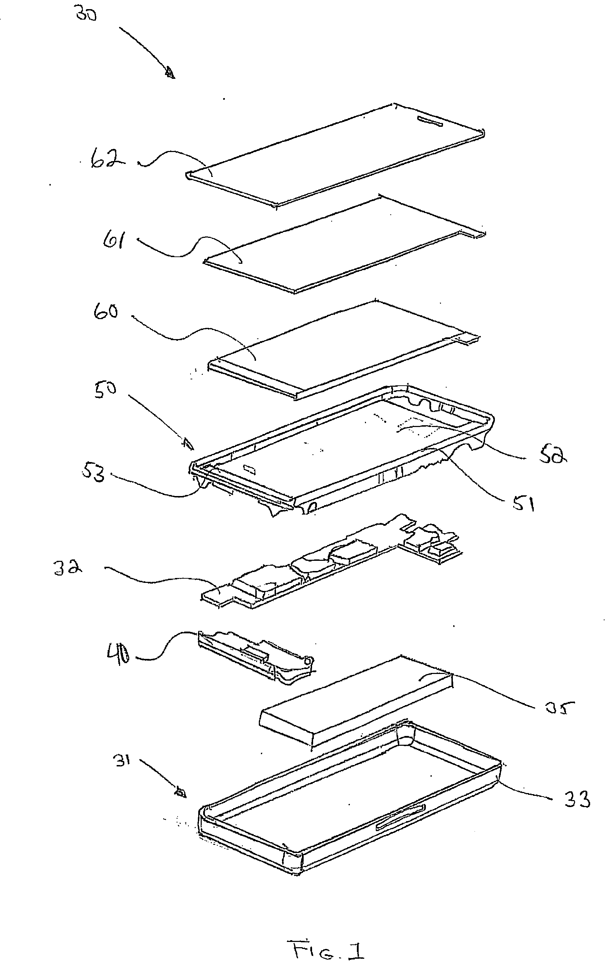

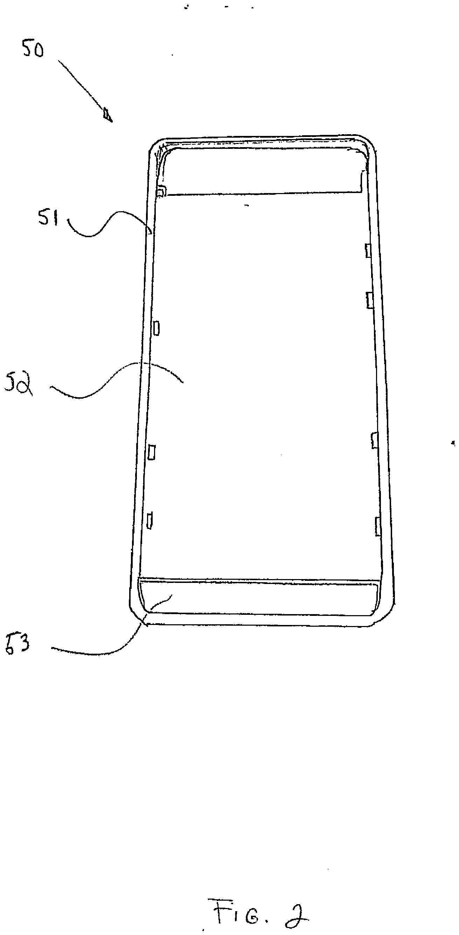

Referring initially to FIGS. 1-2, a mobile wireless communications device **30** illustratively includes a portable housing **31** having a rear portion **33,** and a printed circuit board (PCB) **32,** carried by the portable housing. A rigid mechanical stiffener **50** is carried by the rear portion **33** of the portable housing **31** and includes electrically conductive material. For example, the rigid mechanical stiffener **50** may be metal.

The rigid mechanical stiffener **50** includes a ring **51** coupled to an inner periphery of the rear portion **33** of the portable housing **31.** A plate **52** extends across the ring **51** across the width of the portable housing **31.** The rigid mechanical stiffener **50,** and more particularly, the plate **52,** has slot **53** adjacent an end thereof defining a slot antenna. It should be understood that an end may be a top, bottom, or side of the rigid mechanical stiffener **50** relative to the mobile device **30.**

The rigid mechanical stiffener **50** may also include one or more fastener receiving passageways therein for receiving a respective mechanical fastener, for example, for securing the various components, as will be described herein. Moreover, the rigid mechanical stiffener **50** may also include surface contours to facilitate carrying some of components described herein.

A battery **35** is illustratively carried by the rigid mechanical stiffener **50.** A further antenna **40** in the form of an antenna assembly is carried by the rear portion **33** of the portable housing 31 adjacent an end thereof. The further antenna **40** is coupled to wireless transceiver circuitry **34** carried by the PCB **32.** Additional details of the further antenna **40** will be described in greater detail below.

The rigid mechanical stiffener **50** is carried by the rear portion **33** of the portable housing **31** so that it covers the further antenna **40,** the battery **35,** and the PCB **32.** In other words, the further antenna **40,** the battery **35,** and the PCB **32** are carried between the portable housing **31** and the rigid mechanical stiffener **50.**

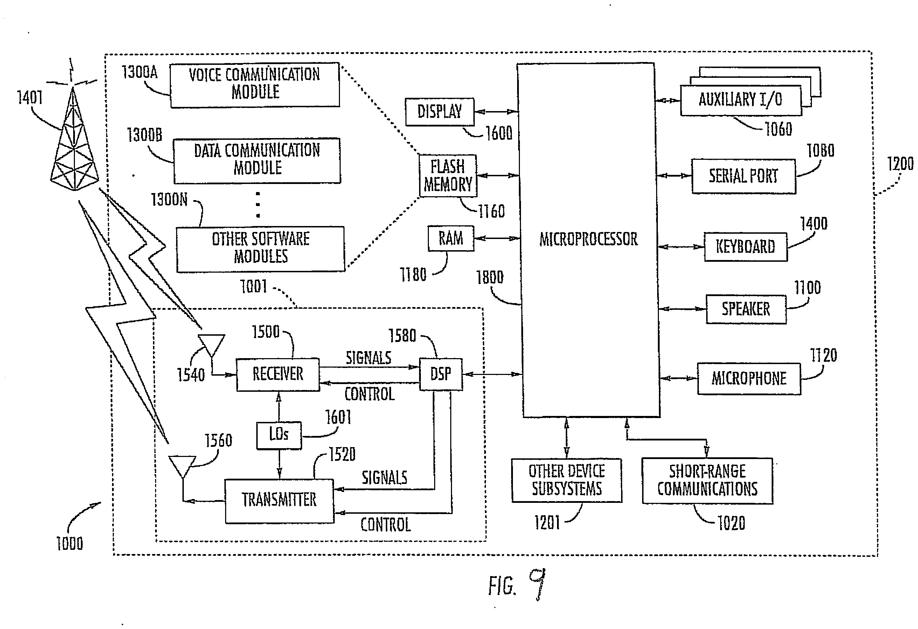

The exemplary device **30** further includes a display **60** carried by or within the ring 51 of the rigid mechanical stiffener **50.** The display **60** may be a liquid crystal display (LCD) panel, for example. Of course, the display **60** may be another type of display. An input device **61** in the form of a touch panel is carried by rigid mechanical stiffener **50** over the display **60** and also within the ring **51,** for example, as for use with a touch screen display. Of course, other and/or additional input devices may be used, for example, control keys. A cover **62,** for example, a glass cover, is carried by the rigid mechanical stiffener **50** on top of the touch panel and within the ring **51.** In other words, the display **60,** the touch panel **61,** and the cover **62** are in a stacked relation carried by the rigid mechanical stiffener **50** within the ring **51.** The cover **62** may form the front portion of the portable housing **31.** Operation of the various device components of an exemplary mobile wireless communications device will be described further below with reference to FIG. 9.

As will be appreciated by those skilled in the art, there has been increasing demand for a thinner mobile wireless communications device that includes a relatively large display, for example. Thus, with the increased size of the display, it may be desirable for mobile wireless communications device manufacturers to develop a mobile wireless communications device that has increased mechanically functionality and increased electrically functionality. Thus, to support this increased functionality it may be desirable to provide mechanical stability in a mobile wireless communications device.

One approach may be to include a relatively large, compared to the size of the portable housing, and relatively strong metallic object to provide increased mechanical strength across the entirety of the mobile wireless communications device. The metallic object may reduce the failure of the mobile wireless communications device from bending or dropping, for example.

The rigid mechanical stiffener **50** advantageously provides increased protection for the electronic components carried by the portable housing **31,** for example, the components described above. In addition, the rigid mechanical stiffener **50** provides increased strength against outside force, for example dropping.

However, as will be appreciated by those skilled in the art, including a relatively large and relatively strong metallic object or stiffener within a portable housing may cause degradation of antenna performance due to the close proximity to an antenna trace. Thus, a metallic stiffener may negatively impact antenna performance and, thus, it is desirable that antenna design be such to reduce the effect thereof.

With the presence of a metallic stiffener, an ordinary antenna approach using a monopole, slot, loop, or planar inverted F-antenna (PIFA) may not provide relatively good radiation because the metallic stiffener causes a parasitic capacitance due to the close distance compared to the operating wavelength. In addition, a metallic stiffener also cancels the radiated wave by generating an out-of-phase reflected wave. Moreover, when the ground plane of the metallic stiffener may be close to the antenna feed, the bandwidth also becomes narrower, resulting in a poor efficiency across the band of interest. To address these problems, the rigid mechanical stiffener **50** of the present embodiments defines a radiator, or slot antenna, as noted above.

As background, a slot antenna is designed on an infinite ground by creating an aperture. A slot antenna typically has a uniform current distribution around the slot and is analyzed to be equivalent to a dipole antenna with introduction of a magnetic dipole. In a handheld application, for example, with a mobile wireless communications device, a slot antenna may often be designed with plus and minus terminals with a narrow gap in parallel, resulting in a relatively narrow bandwidth.

In contrast, the slot **53** in the plate **52** of the rigid mechanical stiffener **50** adjacent an end defines an asymmetric-ground slot antenna by using a mechanical geometry of the relatively large rigid mechanical stiffener **50.** As will be appreciated by those skilled in the art, the slot **53** may be formed elsewhere in the rigid mechanical stiffener **50** as any slot may define a slot antenna.

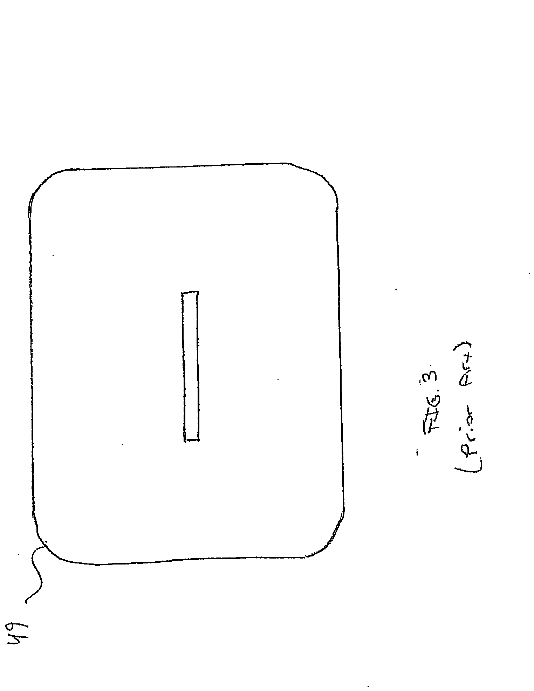

Referring additionally to FIG. 3, a conventional slot antenna **49** has evenly distributed current distribution on the horizontal slot parts. In contrast, the rigid mechanical stiffener **50** defining a slot antenna has asymmetric current distribution around slot 53 by having one relatively large current and the other relatively small current because of the different ground structure size. The advantage of this is that a symmetrical current distribution on the ground plane may not be needed. It should be noted that any opening along the ground plane can work as an antenna. In addition, efficiency increases because of the usage of the exposed metallic rigid mechanical stiffener **50,** which implies that electromagnetic waves can directly propagate into the air without reduced loss of dielectric materials.

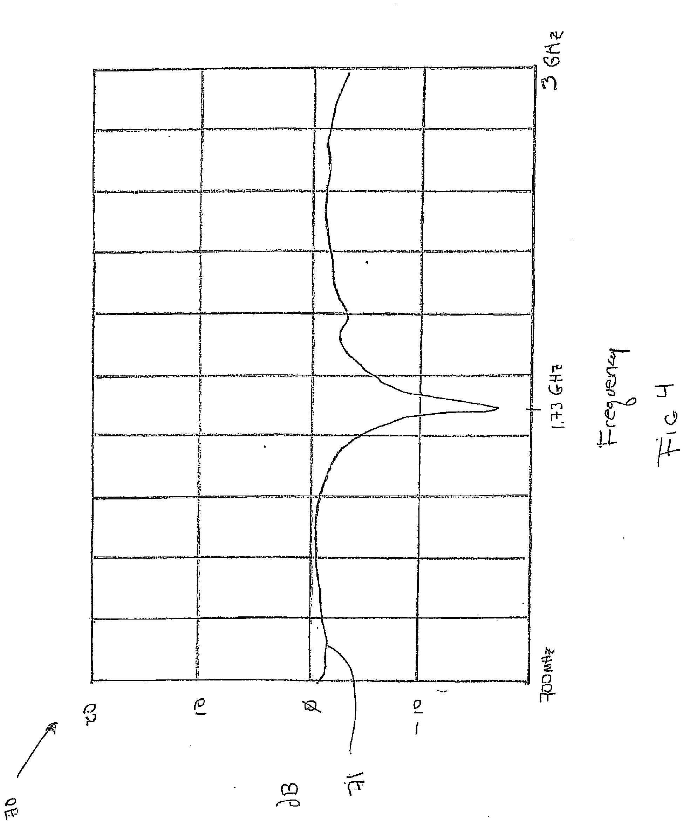

Referring now additionally to the graph **70** in FIG. 4, to verify the concept, a rigid mechanical stiffener **50** is connected from an antenna feed without having any other antenna traces. A semi-rigid cable was used to excite an RF signal to the antenna feed. A network analyzer (Agilent E5071C) was used to measure the reflection coefficient **71** of the slot antenna. The measured reflection coefficient **71** shows that the asymmetric-ground slot makes a relatively strong and wideband resonance at 1700 MHz. The magnitude of the reflection coefficient is -13dB low, which corresponds to approximately 95% of power transmission.

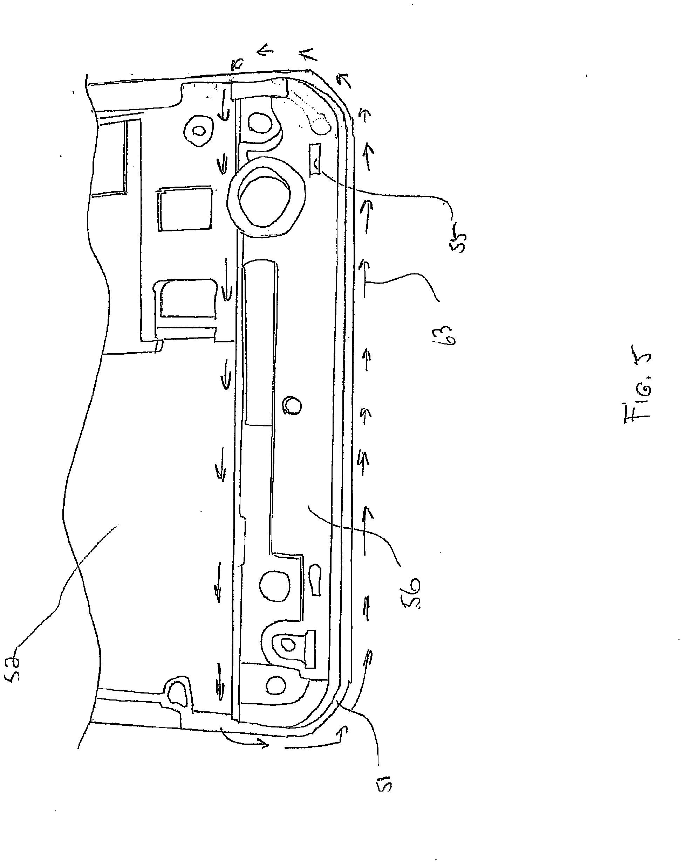

Referring now additionally to FIG. 5, a dielectric body **56** is positioned within the slot **53.** The dielectric body **56** may be plastic, for example, and may provide increased strength. Additionally, the dielectric body **56** may contribute to the resonant frequency, for example, as does the geometry of the slot **53.**

The current distribution **63** is also illustrated. The current distribution **63** flows along the perimeter of the slot **53** and the geometry of the slot determines the resonant frequency. A ground contact **55** is also shown on the rigid mechanical stiffener **50.** The ground contact **55** may be a low resistive material, for example, to increase antenna performance.

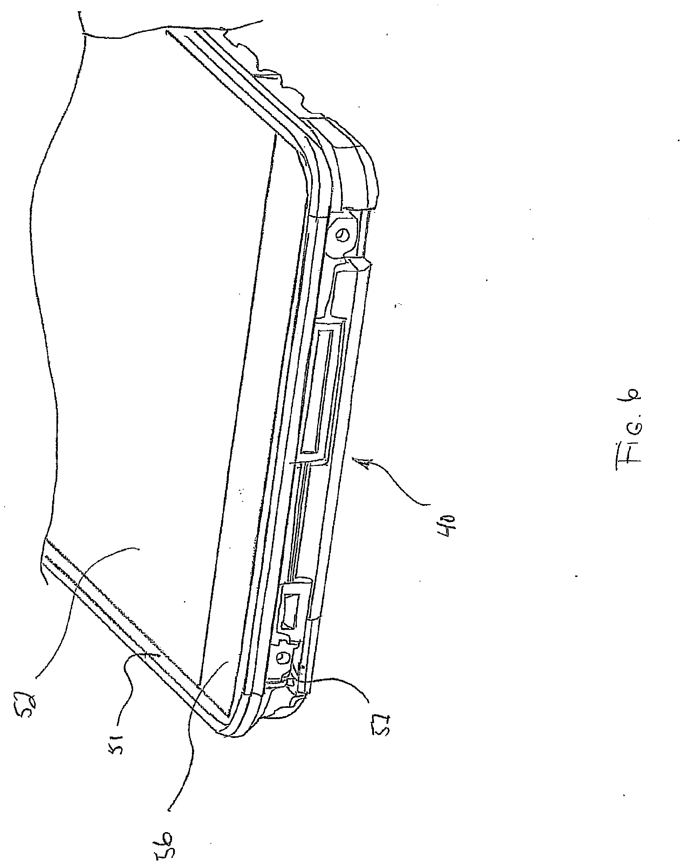

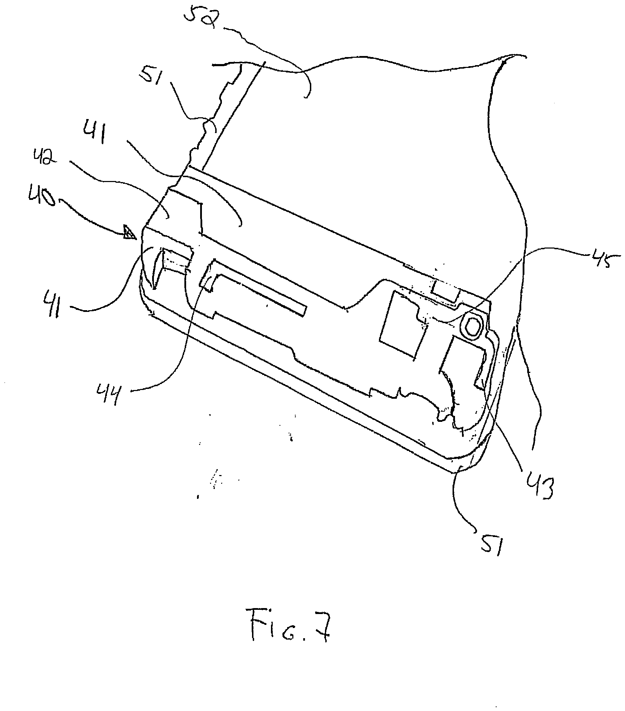

Referring now additionally to FIGS. 6 and 7, a relatively high-conductivity clip **57** or gasket may also be used for electrical contact. The clip **57** illustratively has a "∠" shape. Furthermore, by pre-determining the mechanical structure of the rigid mechanical stiffener **50** for a specific wavelength, a relatively deep and wideband resonance may be achieved at a reduced amount of space and can significantly reduce antenna design time and cost. Additionally, the nature of the exposed slot antenna compared to other internal antennas can also provide higher antenna efficiency.

As noted above, the mobile wireless communications device **30** also includes a further antenna **40.** The rigid mechanical stiffener **50** defining the slot antenna may be advantageously integrated with other antennas, for example the further antenna **40** for multiple-band operation to achieve multiple resonances. For example, the further antenna **40** may be for 3G wireless handheld applications and may be configured cooperate with the rigid mechanical stiffener **50** defining a slot antenna to operate at about 850MHz, 900MHz, 1700MHz, 1800MHz, 1900MHz, and 2100MHz.

The further antenna **40** in the form of an antenna assembly includes a substrate or antenna carrier **41.** Two PIFAs **42, 43,** which are flexible and carried by the substrate **41,** and an open slot antenna **44** cover a band of interest. In some embodiments, the further antenna **40** or antenna assembly may be formed using laser direct structuring (LDS), or metal printing, etc., for example. It may be particularly desirable to evenly distribute the driven current to each antenna element, **42, 43, 44.** Illustratively, a trident-shaped feed line **45** was designed in to address the current distribution To allocate the excited current substantially equally, the two PIFAs **42, 43** were branched from the direct grounding path to the rigid mechanical stiffener **50** to cover 850/900 MHz and the 2100MHz. In this way, the relatively strong current flowing toward the rigid mechanical stiffener **50** is distributed to the side arms for other frequency band operation. By creating a narrow open slot **44** on the second PIFA **43,** or "big trace" for 850/900MHz, a resonance was also achieved at 1800/1900MHz.

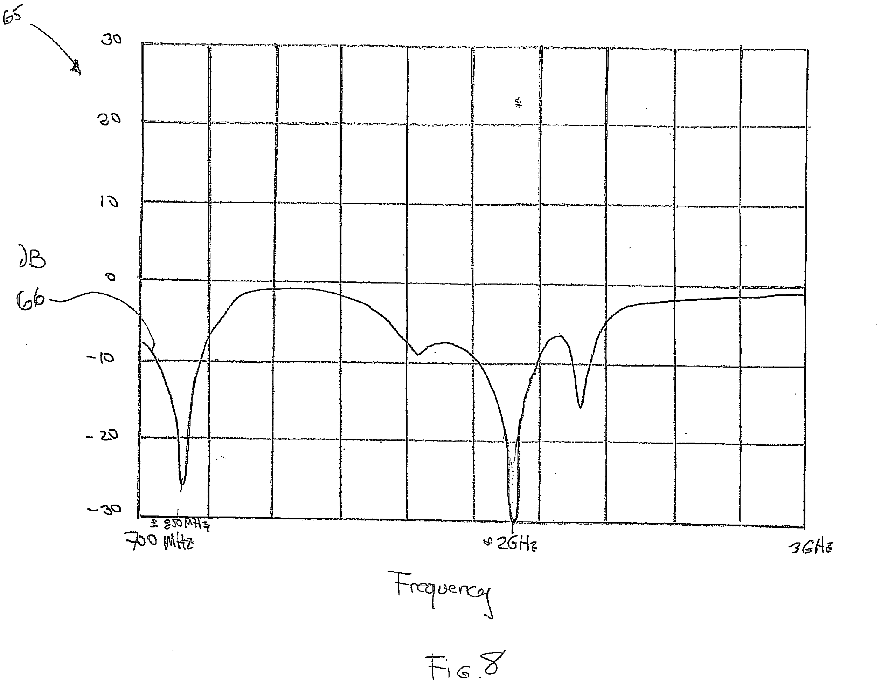

Referring now additionally to the graph **65** in FIG. 8, the measured reflection coefficient **66** for the mobile wireless communications device **30** with the further antenna **40** is illustrated. Illustratively, a relatively broad bandwidth was achieved with more than -7dB of the reflection coefficient across the bandwidth of interest.

A method aspect is directed to a method of making a mobile wireless communications device that includes a portable housing **31,** a printed circuit board **32** (PCB) carried the portable housing, and wireless transceiver circuitry **34** carried by the PCB. The method includes positioning the rigid mechanical stiffener **50** to be carried by a portable housing **31.** The rigid mechanical stiffener **50** includes an electrically conductive material and has a slot **53** therein adjacent an end thereof to define a slot antenna. The method further includes coupling the wireless transceiver circuitry **34** to the slot antenna.

Example components of a mobile wireless communications device **1000** that may be used in accordance with the above-described embodiments are further described below with reference to FIG. 9. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keypad **1400** and the display **1600,** along with other input/output devices **1060, 1080, 1100** and 1120; as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device comprising:
a portable housing;
a printed circuit board carried by said portable housing;
a rigid mechanical stiffener carried by said portable housing and comprising an electrically conductive material, said rigid mechanical stiffener having a slot therein adjacent an end thereof to define a slot antenna; and
wireless transceiver circuitry carried by said PCB and coupled to the slot antenna.

2. The mobile wireless communications device of Claim 1, wherein said rigid mechanical stiffener comprises:
a ring coupled to an inner periphery of said portable housing; and
a plate extending across said ring.

3. The mobile wireless communications device of Claim 2, wherein said plate extends across a width of said portable housing.

4. The mobile wireless communications device of Claim 1, further comprising a dielectric body within the slot.

5. The mobile wireless communications device of Claim 1, wherein said rigid mechanical stiffener comprises metal.

6. The mobile wireless communications device of Claim 1, further comprising a further antenna carried by said portable housing and coupled to said wireless transceiver circuitry.

7. The mobile wireless communications device of Claim 6, wherein said further antenna comprises at least one planar inverted F-antenna (PIFA).

8. The mobile wireless communications device of Claim 6, wherein said further antenna comprises a flexible antenna.

9. The mobile wireless communications device of Claim 6, wherein said further antenna is carried between said portable housing and said rigid mechanical stiffener.

10. The mobile wireless communications device of Claim 1, further comprising a display carried by said mechanical stiffener.

11. The mobile wireless communications device of Claim 1, wherein said portable housing comprises a rear housing portion receiving said rigid mechanical stiffener therein.

12. A method of making a mobile wireless communications device comprising a portable housing, a printed circuit board (PCB) carried the portable housing, and wireless transceiver circuitry carried by the PCB, the method comprising:
positioning a rigid mechanical stiffener to be carried by a portable housing and comprising an electrically conductive material, the rigid mechanical stiffener having a slot therein adjacent an end thereof to define a slot antenna; and
coupling the wireless transceiver circuitry to the slot antenna.

13. The method of Claim 12, wherein positioning the rigid mechanical stiffener comprises coupling a ring to an inner periphery of the portable housing; and wherein the rigid mechanical stiffener comprises a plate extending across the ring.

14. The method of Claim 13, wherein the plate extends across a width of the portable housing.

15. The method of Claim 12, further comprising positioning a dielectric body within the slot.

## Amended claims

### Amended claims in accordance with Rule 137(2) EPC.

**1.** A mobile wireless communications device comprising:
a portable housing;
a printed circuit board carried by said portable housing;
a rigid mechanical stiffener carried by said portable housing and comprising an electrically conductive material, said rigid mechanical stiffener having a slot therein adjacent an end thereof to define a slot antenna, said rigid mechanical stiffener further comprising
a ring coupled to an inner periphery of said portable housing, and
a plate having the slot therein and extending across said ring; and
wireless transceiver circuitry carried by said PCB and coupled to the slot antenna.

**2.** The mobile wireless communications device of Claim 1, wherein said plate extends across a width of said portable housing.

**3.** The mobile wireless communications device of Claim 1, further comprising a dielectric body within the slot.

**4.** The mobile wireless communications device of Claim 1, wherein said rigid mechanical stiffener comprises metal.

**5.** The mobile wireless communications device of Claim 1, further comprising a further antenna carried by said portable housing and coupled to said wireless transceiver circuitry.

**6.** The mobile wireless communications device of Claim 5, wherein said further antenna comprises at least one planar inverted F-antenna (PIFA).

**7.** The mobile wireless communications device of Claim 5, wherein said further antenna comprises a flexible antenna.

**8.** The mobile wireless communications device of Claim 5, wherein said further antenna is carried between said portable housing and said rigid mechanical stiffener.

**9.** The mobile wireless communications device of Claim 1, further comprising a display carried by said mechanical stiffener.

**10.** The mobile wireless communications device of Claim 1, wherein said portable housing comprises a rear housing portion receiving said rigid mechanical stiffener therein.

**11.** A method of making a mobile wireless communications device comprising a portable housing, a printed circuit board (PCB) carried the portable housing, and wireless transceiver circuitry carried by the PCB, the method comprising:
coupling a ring of a rigid mechanical stiffener to an inner periphery of a portable housing and comprising an electrically conductive material and a plate extending across the ring, the plate having a slot therein adjacent an end thereof to define a slot antenna; and
coupling the wireless transceiver circuitry to the slot antenna.

**12.** The method of Claim 11, wherein the plate extends across a width of the portable housing.

**13.** The method of Claim 11, further comprising positioning a dielectric body within the slot.
